# EUROPÄISCHE PATENTSCHRIFT

(11) **EP 2 923 777 B1**
(45) Veröffentlichungstag und Bekanntmachung des Hinweises auf die Patenterteilung: **27.07.2016**
(21) Anmeldenummer: 14400022.1
(22) Anmeldetag: 24.03.2014
(51) Int. Cl.: B07C 5/36

(54) **Sortiervorrichtung**
Sorting device
Dispositif de tri

(43) Veröffentlichungstag der Anmeldung: 30.09.2015
(73) Patentinhaber: FESTO AG & Co. KG, 73734 Esslingen (DE)
(72) Erfinder: Starzmann, Ralf, 73262 Reichenbach (DE)
(74) Vertreter: Patentanwälte Magenbauer & Kollegen Partnerschaft mbB

(56) Entgegenhaltungen:
- WO-A1-2010/140096

## Beschreibung

Die Erfindung betrifft eine Sortiervorrichtung zum Aussortierten von Teilen mittels Luftstößen, mit mindestens einer Sortiereinheit, die einen Ventilträger aufweist, der eine Mehrzahl von elektrisch betätigbaren Sortierventilen mit 2/2-Wege-Funktionalität trägt, die aus einem gemeinsamen Speisekanal mit Druckluft versorgt werden und die jeweils an einen zu einer Sortierdüse führenden individuellen Sortierkanal angeschlossen sind, wobei jedes Sortierventil wahlweise in eine den zugeordneten Sortierkanal mit dem Speisekanal verbindende und dadurch das Austreten eines Luftstoßes aus der zugeordneten Sortierdüse hervorrufende Offenstellung oder in eine Schließstellung schaltbar ist, wobei in jedem Sortierkanal zumindest während der Schließstellung des zugeordneten Sortierventils zu Reinigungszwecken aus einem Spülluftkanal der Sortiervorrichtung Spülluft einspeisbar ist, die mit einem im Vergleich zu dem in der Offenstellung erzeugbaren Luftstoß geringeren Volumenstrom aus der Sortierdüse austritt.

Eine aus der DE 10 2009 006 654 B3 bekannte Sortiervorrichtung dieser Art wird in Sortieranlagen eingesetzt, um aus einem Förderstrom von Stückgut einzelne Teile unter Berücksichtigung gewisser Gesichtspunkte durch pneumatische Druckluftbeaufschlagung mittels eines Luftstoßes gezielt aus dem Förderstrom herauszublasen. Die Anwendungsfelder sind vielfältig und reichen von der Nahrungsmittelindustrie über den Bergbau bis hin zu Recyclinganwendungen bei der Abfallverwertung. In der EP 0 426 893 A1 ist ein mögliches Verfahren zur Nutzung einer Sortiervorrichtung beschrieben, bei dem die Lichtdurchlässigkeit der zu sortierenden Teile als Sortierkriterium herangezogen wird.

Die individuellen Luftstöße werden gemäß DE 10 2009 006 654 B3 mit Hilfe von als Sortierventile bezeichenbaren 2/2-Wegeventilen erzeugt, die in einer Vielzahl auf einem Ventilträger montiert und in die Verbindung zwischen einem gemeinsamen Speisekanal und individuellen Sortierkanälen eingeschaltet sind, wobei die Sortierkanäle jeweils zu einer Sortierdüse führen, aus der der Luftstoß von Fall zu Fall austritt. Um auch bei Zeiten längerer Inaktivität einzelner Sortierventile eine Verschmutzung der Sortierventile und/oder der Sortierkanäle zu vermeiden, ist bei der bekannten Sortiervorrichtung jedes Sortierventil in der Lage, eine Spülluftströmung in den zugeordneten Sortierkanal einzuleiten. Die Spülluftströmung resultiert daraus, dass die Sortierventile in der Schließstellung den gemeinsamen Speisekänal nicht vollständig vom zugeordneten Sortierkanal abtrennen, sondern einen geringen Volumenstrom an Druckluft durchlassen, der den sich anschließenden Sortierkanal als Spülluft durchströmt. Da zur Gewährleistung dieser Funktionalität ein relativ komplexer Aufbau der Sortierventile erforderlich ist, dürfte die bekannte Sortiervorrichtung relativ teuer in der Herstellung sein. Außerdem können Veränderungen im Volumenstrom der Spülluft nur individuell bei den einzelnen Sortierventilen eingestellt werden, was die Handhabung in Fällen beeinträchtigt, -in denen aufgrund wechselnder Sortieranwendungen unterschiedlich hohe Durchflussraten der Spülluft angebracht sind.

Der Anmelderin sind darüber hinaus intern auch druckschriftlich nicht belegbare Sortiervorrichtungen bekannt, bei denen 3/2-Wegeventile als Sortierventile eingesetzt werden, bei denen ein Ventilanschluss mit einem eine Spülluft bereitstellenden Spülluftkanal verbunden sind, so dass sie immer dann Spülluft durch den Sortierkanal hindurchleiten, wenn der Sortierkanal von dem die Druckluft für den Luftstoß bereitstellenden Speisekanal abgetrennt ist. Hier führt die Verwendung der 3/2-Wegeventile zu relativ hohen Kosten, insbesondere wenn man bedenkt, dass Sortiervorrichtungen meist mit einer sehr großen Anzahl von Sortierventilen ausgestattet sein müssen.

Der Erfindung liegt die Aufgabe zugrunde, eine Sortiervorrichtung zu schaffen, die bei kostengünstigem Aufbau eine wirksame Luftspülung der Sortierkanäle ermöglicht.

Zur Lösung dieser Aufgabe ist in Verbindung mit den eingangs genannten Merkmalen vorgesehen, dass mehrere oder sämtliche Sortierkanäle der Sortiereinheit unabhängig von den Sortierventilen an einen gemeinsamen Spülluftkanal angeschlossen sind.

Auf diese Weise können die Sortierkanäle der Sortiervorrichtung ohne Mitwirkung der Sortierventile und quasi unter Umgehung derselben mit Spülluft beaufschlagt werden, um Ablagerungen von Verunreinigungen in den Sortierkanälen zu vermeiden. Die von den Sortierventilen unabhängige Spülung der Sortierkanäle erlaubt es, auf kostengünstige 2/2-Wegeventile als Sortierventile zurückzugreifen, die keiner speziellen Anpassung hinsichtlich der Steuerung von Spülluft bedürfen. Man kann 2/2-Wegeventile einsetzen, die in der Schließstellung die Verbindung zwischen dem Speisekanal und dem zugeordneten Sortierkanal vollständig absperren, weil die Spülluft quasi am Sortierventil vorbei dem jeweiligen Sortierkanal zugeführt wird. Es besteht darüber hinaus die vorteilhafte Möglichkeit, durch Veränderung der über den gemeinsamen Spülkanal zugeführten Spülluftmenge den durch die Sortierkanäle hindurchtretenden Spülluft-Volumenstrom einheitlich einzustellen, so dass der Luftverbrauch mit geringem Zeitaufwand verringert werden kann, wenn aufgrund der momentanen Umgebungsbedingungen die Verschmutzungsgefahr für die Sortierkanäle relativ gering ist. Nicht zuletzt gestattet der erfindungsgemäße Aufbau eine ununterbrochene Spülluftbeaufschlagung der Sortierkanäle unabhängig vom Schaltzustand der Sortierventile, so dass der ständige Spülluftstrom von Fall zu Fall von einem erzeugten Luftstoß lediglich überlagert wird. Dadurch ist sichergestellt, dass während des Betriebes der Sortiereinheit aus jeder Sortierdüse ständig Luft austritt, die lediglich in Abhängigkeit davon, ob momentan ein Luftstoß erzeugt wird oder nicht, in ihrer Durchflussmenge variiert und somit zu keiner Zeit durch die Sortierdüsen hindurch ein Eindringen von Verunreinigungen zulässt.

Vorteilhafte Weiterbildungen der Erfindung gehen aus den Unteransprüchen hervor.

Vorzugsweise ist die Sortiervorrichtung so ausgebildet, dass in der Sortiereinheit der gemeinsame Spülluftkanal an einer Stelle in jeden individuellen Sortierkanal einmündet, die sowohl zur zugeordneten Sortierdüse als auch zum zugeordneten Sortierventil beabstandet ist. Die maßgebliche Luftströmung der Spülluft durchströmt hierbei nur einen sich an die Sortierdüse anschließenden Teil-Längenabschnitt des Sortierkanals, was aber völlig ausreichend ist, um einem Verschmutzungseintritt durch die Sortierdüsen hindurch vorzubeugen.

Der gemeinsame Spülluftkanal ist zweckmäßigerweise ein bezüglich des die Druckluft für die Luftstöße bereitstellenden gemeinsamen Speisekanals gesonderter Kanal der Sortiereinheit. Auf diese Weise können die im Spülluftkanal herrschenden Druckverhältnisse sehr variabel und unabhängig von dem im Speisekanal herrschenden Fluiddruck bereitgestellt werden. Es ist vorteilhaft, wenn der gemeinsame Spülluftkanal außen an der Sortiereinheit mit einer Spülluft-Einspeiseöffnung ausmündet, an die eine die Spülluft bereitstellende Spülluftquelle anschließbar ist.

Grundsätzlich kann die Spülluftquelle die gleiche Druckluftquelle sein, die auch den gemeinsamen Speisekanal mit Druckluft versorgt. Unabhängig von der Art der Druckluftquelle ist es vorteilhaft, wenn dem gemeinsamen Spülluftkanal eine Spülstrom-Vorgabeeinrichtung zugeordnet ist, mit der sich der Volumenstrom der Spülluftströmung variabel und insbesondere unter Berücksichtigung der momentanen Umgebungsbedingungen variabel einstellen lässt. Als Spülstrom-Vorgabeeinrichtung kommt insbesondere ein zu der Sörtiervorrichtung gehörendes Druckregelventil zum Einsatz. Die Spülstrom-Vorgabeeinrichtung lässt sich besonders bequem an eine an der Außenseite der Sortiereinheit zur Verfügung stehende Spülluft-Einspeiseöffnung anschließen.

Als besonders zweckmäßig wird es angesehen, wenn der gemeinsame Spülluftkanal unter Zwischenschaltung jeweils mindestens eines individuellen Drosselkanals mit jedem Sortierkanal verbunden ist. Auf diese Weise kann sichergestellt werden, dass alle an den gemeinsamen Spülluftkanal angeschlossenen Sortierkanäle mit dem gleichen Spülluftvolumenstrom beaufschlagt werden und dass nicht etwa die Spülluftströmung in dem einen oder anderen Sortierkanal intensiver ist als in den restlichen Sortierkanälen. Die individuellen Drosselkanäle lassen sich besonders kostengünstig dadurch realisieren, dass in einem von zwei aneinander angesetzten Körpern der Sortiereinheit Nuten mit geringem Querschnitt ausgebildet sind, die vom anderen Körper abgedeckt werden. Dadurch erspart man sich umständlich herzustellende Kanalbohrungen zur Realisierung der Drosselkanäle.

Bei einem als besonders vorteilhaft angesehenen Aufbau der Sortiervorrichtung enthält die mindestens eine Sortiereinheit einen in einem Fügebereich an den Ventilträger angesetzten Düsenkörper, in dem alle Sortierdüsen ausgebildet sind und der zweckmäßigerweise einen einstückigen Aufbau hat. Jeder Sortierkanal setzt sich aus zwei sich in der Längsrichtung aneinander anschließenden Teil-Längenabschnitten zusammen, und zwar aus einem im Ventilträger ausgebildeten inneren Teil-Längenabschnitt und einem im Düsenkörper ausgebildeten äußeren Teil-Längenabschnitt. Der innere Teil-Längenabschnitt verläuft zwischen dem Fügebereich und dem zugeordneten Sortierventil, der äußere Teil-Längenabschnitt verläuft zwischen dem Fügebereich und der zugeordneten Sortierdüse. Die Verbindung der Sortierkanäle mit dem gemeinsamen Spülluftkanal erfolgt vorzugsweise in dem Fügebereich zwischen dem Ventilträger und dem Düsenkörper.

Als besonders zweckmäßig wird es in diesem Zusammenhang angesehen, wenn der gemeinsame Spülkanal in dem Düsenkörper ausgebildet ist. Insofern kann sich die Ausgestaltung des Ventilträgers auf die Ventiltechnik und die Maßnahmen zur Erzeugung der Luftstöße konzentrieren.

Bevorzugt verfügt der Ventilträger in dem Fügebereich über eine Ventilträger-Fügefläche, an die der Düsenkörper mit einer an ihm ausgebildeten Düsenkörper-Fügefläche angesetzt ist. Dabei liegen sich Kanalmündungen der ineinander übergehenden inneren und äußeren Teil-Längenabschnitte in dem Fügebereich gegenüber. Die Anordnung ist so getroffen, dass sich wenigstens eine, bevorzugt eine lineare Erstreckung aufweisende Mündungsreihe ergibt, die sich aus paarweise gegenüberliegenden Kanalmündungen zusammensetzt.

Zweckmäßigerweise ist in dem Fügebereich zwischen dem Ventilträger und dem Düsenkörper ein Spülluft-Verteilkanal des gemeinsamen Spülluftkanals angeordnet, der mit sämtlichen der Mündungsreihe zugeordneten Sortierkanälen kommuniziert. Dieser Spülluft-Verteilkanal ist zweckmäßigerweise gebildet durch eine in der Düsenkörper-Fügefläche ausgebildete Verteilnut, die von der Ventilträger-Fügefläche abgedeckt ist, die in dem der Verteilnut gegenüberliegenden Bereich bevorzugt nutenlos ausgebildet ist. Eine umgekehrte Anordnung oder auch eine Anordnung, bei der Teilquerschnitte der Verteilnut sowohl im Düsenkörper als auch im Ventilträger ausgebildet sind, sind zwar ebenfalls möglich, werden aber derzeit als weniger zweckmäßig angesehen, weil hierzu eine entsprechende Profilierung der Ventilträger-Fügefläche erforderlich ist.

Bevorzugt hat der Spülluft-Verteilkanal einen in sich geschlossenen Längsverlauf, wobei er die zugeordnete Mündungsreihe in dem Fügebereich umrahmt. Der Spülluft-Verteilkanal ist in diesem Fall also ein Ringkanal, wobei die zugeordnete Verteilnut eine sich in dem Fügebereich erstreckende Ringnut ist.

Wie schon erwähnt, ist außen an der Sortiereinheit zweckmäßigerweise eine mit dem gemeinsamen Spülluftkanal kommunizierende Spülluft-Einspeiseöffnung angeordnet. Diese SpülluftEinspeiseöffnung befindet sich zweckmäßigerweise am Düsenkörper, wobei sie über einen in dem Düsenkörper ausgebildeten Verbindungskanal mit dem Spülluft-Verteilkanal und insbesondere mit der zu dessen Bildung beitragenden Verteilnut kommuniziert.

Es ist desweiteren von Vorteil, wenn der bevorzugt als ein Ringkanal ausgebildete Spülluft-Verteilkanal in dem Fügebereich unter Zwischenschaltung jeweils mindestens eines individuellen Drosselkanals in fluidischer Parallelschaltung mit jedem Sortierkanal verbunden ist, um eine gleichmäßige Beaufschlagung der diversen Sortierkanäle mit Spülluft zu gewährleisten. Dabei sind die individuellen Drosselkanäle zweckmäßigerweise von in der Düsenkörper-Fügefläche ausgebildeten und von der Ventilträger-Fügefläche abgedeckten Drosselnuten gebildet. Auf diese Weise ergibt sich eine wesentlich einfachere Herstellung der Drosselkanäle als bei Realisierung in Form von Kanalbohrungen. Es besteht auch die alternative Möglichkeit, die Drosselnuten zumindest teilweise in der Ventilträger-Fügefläche auszubilden.

Bevorzugt sind die Sortierventile an dem Ventilträger in mindestens einer Ventilreihe aufeinanderfolgend angeordnet. Ein besonders kompakter Aufbau ergibt sich, wenn an dem Ventilträger zwei zueinander parallele Ventilreihen von Sortierventilen angeordnet sind, die mittels zugeordneter Sortierkanäle mit in nur einer einzigen Reihe angeordneten Sortierdüsen verbunden sind. Dabei sind die aufeinanderfolgenden Sortierdüsen zweckmäßigerweise abwechselnd mit Sortierventilen der einen und der anderen Ventilreihe verbunden. Von Vorteil ist es in diesem Zusammenhang, wenn die Sortierventile der einen Ventilreihe mit einem der halben Ventilbreite entsprechenden Versatz zu den Sortierventilen der anderen Ventilreihe angeordnet sind, wobei der Mittenabstand benachbarter Sortierkanäle bevorzugt der halben Ventilbreite entspricht.

Nachfolgend wird die Erfindung anhand der beiliegenden Zeichnung näher erläutert. In dieser zeigen:

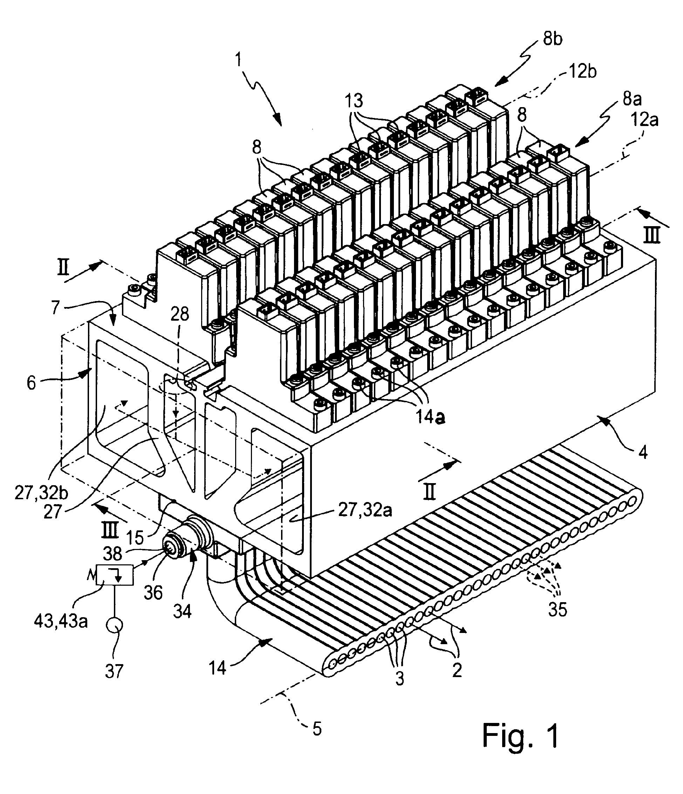

- Figur 1: in perspektivischer Darstellung eine erfindungsgemäße Sortiervorrichtung bevorzugten Aufbaus,

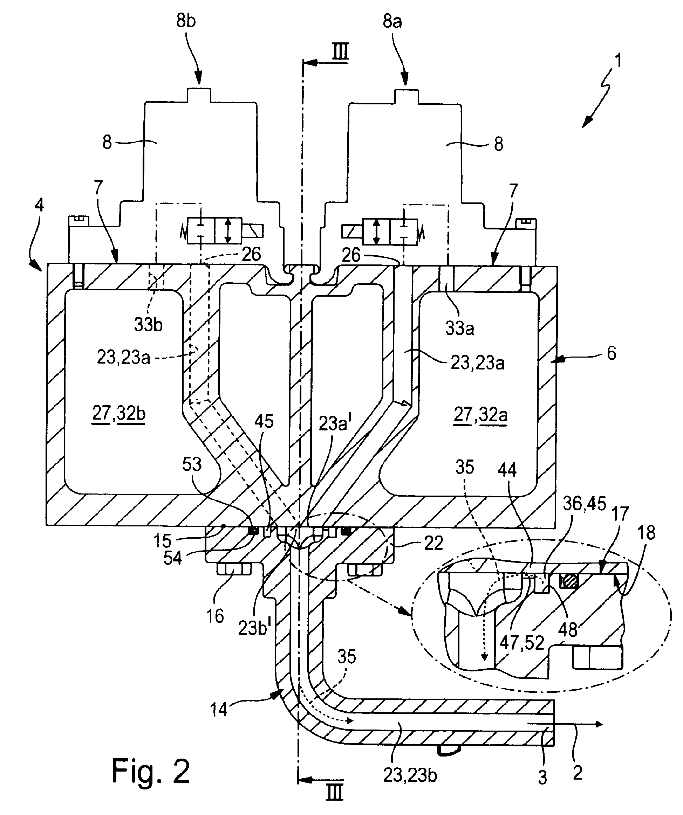

- Figur 2: die Sortiervorrichtung aus Figur 1 in einem Querschnitt gemäß Schnittlinie II-II aus Figur 1, wobei die Sortierventile nur schematisch angedeutet sind,

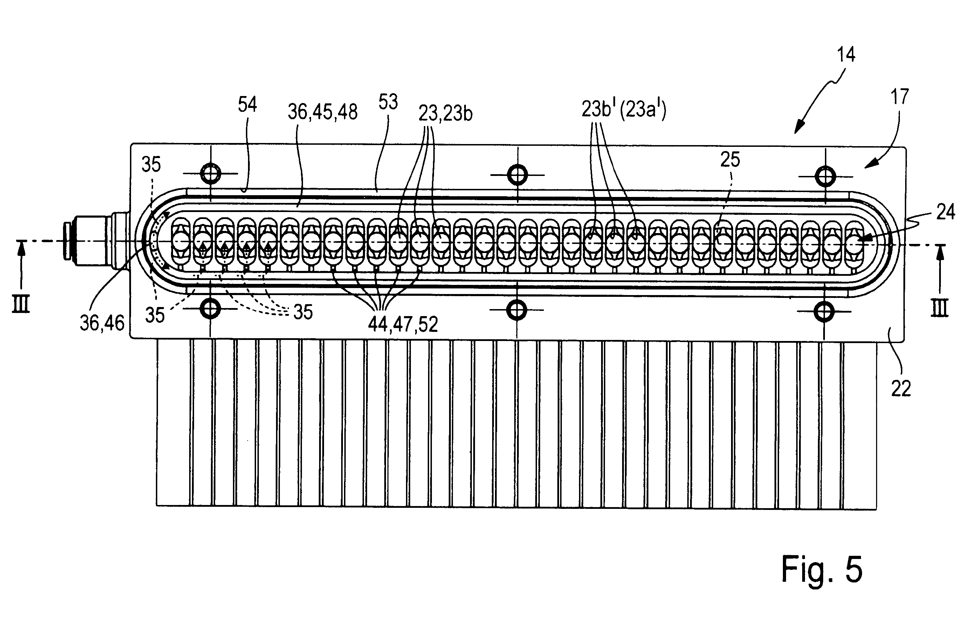

- Figur 3: einen Längsschnitt durch die Sortiervorrichtung aus Figur 1 gemäß Schnittlinie III-III aus Figuren 1, 2 und 5,

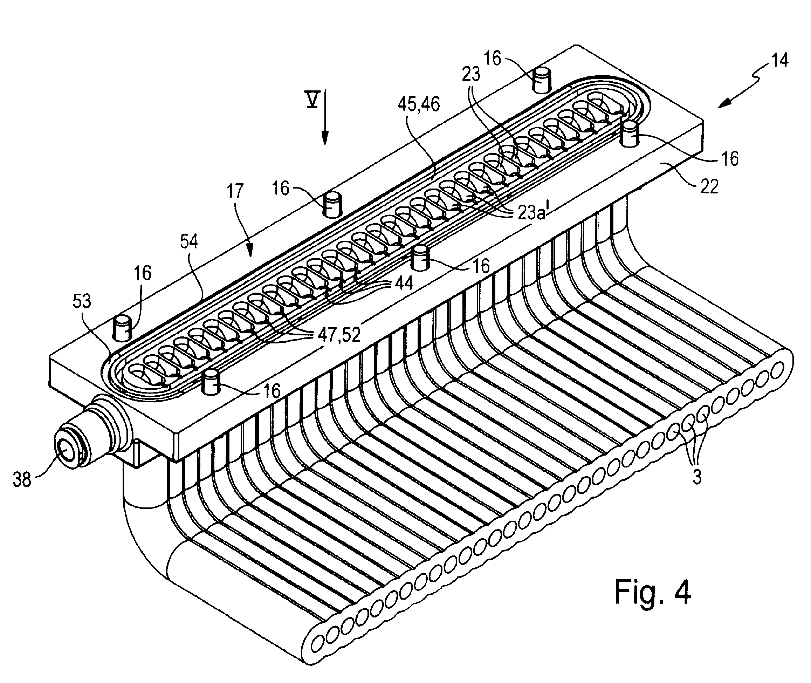

- Figur 4: eine isometrische Einzeldarstellung eines zu der Sortiervorrichtung gehörenden, die Sörtierdüsen definierenden Düsenkörpers, und
- Figur 5: eine Draufsicht des Düsenkörpers mit Blickrichtung gemäß Pfeil V aus Figur 4.

Die in ihrer Gesamtheit mit Bezugsziffer 1 bezeichnete Sortiervorrichtung ist dazu ausgebildet, durch Pfeile angedeutete Luftstöße 2 selektiv an jeder beliebigen einer Mehrzahl von Sortierdüsen 3 auszugeben. Bei den Luftstößen 2 handelt es sich um impulsartig austretende Luftströmungen, die auf einen im Betrieb der Sortiervorrichtung 1 an den Sortierdüsen 3 vorbeilaufenden Förderstrom aus Stückgut gerichtet werden, um unter Berücksichtigung gewisser Sortierkriterien ausgewählte Stückgut-Gegenstände aus dem Förderstrom herauszublasen. Auf diese Weise ist insbesondere eine Selektion in Gutteile und Schlechtteile möglich, beispielsweise in der Nahrungsmittelindustrie aber auch in beliebigen anderen Industriezweigen.

Die Sortiervorrichtung 1 enthält mindestens eine Sortiereinheit 4, die eine Mehrzahl von Sortierdüsen 3 aufweist, die zweckmäßigerweise in einer linearen Reihe zu einer Düsenreihe aufgereiht sind, deren Längsrichtung bei 5 durch eine strichpunktierte Linie angedeutet ist. Alle Sortierdüsen 3 liegen zweckmäßigerweise in einer gemeinsamen Ebene und sind jeweils von der Austrittsöffnung eines individuellen Sortierkanals 23 gebildet, durch den die den Luftstoß 2 ausbildende Druckluft hindurchgeleitet wird.

Die Sortiervorrichtung 1 kann über mehrere in beliebiger Verteilung angeordnete Sortiereinheiten 4 verfügen.

Die Sortiereinheit 4 verfügt über einen Ventilträger 6, der vorzugsweise blockförmig oder plattenförmig ausgebildet ist. An mindestens einer äußeren Bestückungsfläche 7 des Ventilträgers 6 ist eine Mehrzahl von elektrisch betätigbaren 2/2-Wegeventilen installiert, die aufgrund ihrer Zweckbestimmung im Folgenden auch als Sortierventile 8 bezeichnet werden. Exemplarisch sind die Sortierventile 8 in zwei zueinander parallelen ersten und zweiten Ventilreihen 8a, 8b mit zueinander parallelen Reihenrichtungen 12a, 12b nebeneinander an der Bestückungsfläche 7 angeordnet. Jede Ventilreihe 8a, 8b enthält mehrere in der jeweiligen Reihenrichtung 12a, 12b aufeinanderfolgend angeordnete Sortierventile 8. Die Sortierventile 8 sind individuell elektrisch betätigbar, wobei sie über elektromechanische Anschlussmittel 13 verfügen, an denen die hierzu erforderlichen elektrischen Betätigungssignale zuführbar sind.

Abweichend vom Ausführungsbeispiel kann die Sortiereinheit 4 auch mit einer andern Anzahl von Ventilreihen an Sortierventilen 8 ausgestattet sein und insbesondere über lediglich eine solche Ventilreihe verfügen. Insbesondere die Doppelanordnung von Ventilreihen 8a, 8b erlaubt jedoch einen besonders kompakten Aufbau der Sortiereinheit 4. Dies insbesondere dann, wenn die Sortierventile 8 der ersten Ventilreihe 8a bezüglich den Sortierventilen 8 der zweiten Ventilreihe 8b um eine halbe Ventilbreite in den Reihenrichtungen 12a, 12b versetzt zueinander angeordnet sind, worauf später noch eingegangen wird.

Die Sortierventile 8 sind insbesondere durch Schraubverbindungen 14a an dem Ventilträger 6 fixiert, wenngleich prinzipiell auch andere Befestigungsarten möglich sind wie auch eine komplette Integration der Sortierventile 8 in den Ventilträger 6.

An dem Ventilträger 6 ist mindestens ein und bevorzugt genau ein Düsenkörper 14 angeordnet, der eine Mehrzahl der Sortierdüsen 3 aufweist und der insbesondere sämtliche Sortierdüsen 3 der Sortiereinheit 4 definiert. Die Anzahl der Sortierdüsen 3 entspricht zweckmäßigerweise der Anzahl der am Ventilträger 6 angeordneten Sortierventile 8.

Wenngleich es prinzipiell möglich wäre, den Ventilträger 6 und den Düsenkörper 14 einstückig miteinander auszubilden, wird es aus noch zu erläuternden Gründen als vorteilhaft angesehen, wenn es sich bei dem Düsenkörper 14 gemäß dem Ausführungsbeispiel um einen bezüglich des Ventilträgers 6 gesonderten Körper handelt, der in einem Fügebereich 15 an einer Außenfläche des Ventilträgers 6 montiert ist. Zur Befestigung ist beim Ausführungsbeispiel eine Schraubverbindung vorgesehen, zu der mehrere Befestigungsschrauben 16 gehören, die den Düsenkörper 14 durchsetzen, wobei sie sich mit ihren Schraubenköpfen an den Düsenkörper 14 abstützen und in Gewindebohrungen des Ventilträgers 6 eingeschraubt sind. Dabei wird der Düsenkörper 14 in den Fügebereich 15 mit dem Ventilträger 6 verspannt.

Eine bevorzugt vorhandene lösbare Verbindung zwischen dem Düsenkörper 14 und dem Ventilträger 6 schafft die vorteilhafte Möglichkeit, ein und denselben Ventilträger 6 alternativ mit unterschiedlich gestalteten Düsenkörpern 14 auszustatten.

Der Düsenkörper 14 hat eine Düsenkörper-Fügefläche 17, mit der er in dem Fügebereich 15 an eine Ventilträger-Fügefläche 18 des Ventilträgers 6 angesetzt ist. Zweckmäßigerweise ist die Düsenkörper-Fügefläche 17 Bestandteil eines plattenartigen Flanschabschnittes 22 des Düsenkörpers 14, der auch von den Befestigungsschrauben 16 durchsetzt ist.

Die Bestückungsfläche 7 ist in eine der Anzahl der Sortierventile 8 entsprechende Anzahl von Bestückungsplätzen eingeteilt, an denen jeweils eines der Sortierventile 8 angeordnet ist. Von jedem dieser Bestückungsplätze geht ein eigener Sortierkanal 23 aus, der sowohl den Ventilträger 6 als auch den Düsenkörper 14 durchsetzt. Jeder Sortierkanal 23 hat dementsprechend einen in dem Ventilträger 6 verlaufenden inneren Teil-Längenabschnitt 23a und einen daran anschließend im Düsenkörper 14 verlaufenden äußeren Teil-Längenabschnitt 23b. Der innere Teil-Längenabschnitt 23a verläuft zwischen der Bestückungsfläche 7 und der Ventilträger-Fügefläche 18. Der äußere Teil-Längenabschnitt 23b verläuft zwischen der Ventilträger-Fügefläche 18 und einer die Sortierdüse 3 definierenden äußeren Kanalöffnung. Der Längsverlauf des äußeren Teil-Längenabschnittes 23b ist so gewählt, dass die Sortierdüsen 3 in die für die Anwendung der Sortiervorrichtung 1 gewünschte Richtung weisen. Beim Ausführungsbeispiel haben sie hierzu jeweils einen etwa L-förmigen Längsverlauf.

In dem Fügebereich 15 liegen sich erste Kanalmündungen 23a' der inneren Teil-Längenabschnitte 23a und zweite Kanalmündungen 23b' der.äußeren Teil-Längenabschnitte 23b paarweise gegenüber, so dass sich eine durchgehende Fluidverbindung zwischen dem inneren Teil-Längenabschnitt 23a und dem äußeren Teil-Längenabschnitt 23b jedes Sortierkanals 23 ergibt.

Die paarweise miteinander kommunizierenden ersten und zweiten Kanalmündungen 23a', 23b' sind zweckmäßigerweise in mindestens einer und bevorzugt in genau einer Mündungsreihe 24 aneinandergereiht, wobei die Mündungsreihe 24 bevorzugt eine lineare Erstreckung hat, deren Reihenrichtung bei 25 durch eine strichpunktierte Linie angedeutet ist. Die Mündungsreihe 24 erstreckt sich zweckmäßigerweise parallel zu jeder Ventilreihe 8a, 8b.

Die inneren Teil-Längenabschnitte 23a der Sortierkanäle 23 münden mit jeweils einer Einspeiseöffnung 26 zu der Bestückungsfläche 7 aus. Über diese Einspeiseöffnungen 26 kommunizieren die Sortierkanäle 23 mit jeweils einem der Sortierventile 8. Exemplarisch sind diese Einspeiseöffnungen 26 in zwei zueinander parallelen Öffnungsreihen angeordnet, die jeweils einer der beiden Ventilreihen 8a, 8b zugeordnet sind. Dabei sind die der ersten Ventilreihe 8a zugeordneten Einspeiseöffnungen 26 dem axialen Versatz der beiden Ventilreihen 8a, 8b entsprechend ebenfalls mit einem Versatz zu den Einspeiseöffnungen 26 der zweiten Ventilreihe 8b angeordnet. Dies wiederum hat zur Folge, dass auch die inneren Teil-Längenabschnitte 23a der Sortierkanäle 23 in der Reihenrichtung 12a, 12b der Ventilreihen 8a, 8b versetzt zueinander angeordnet sind. Indem die Kanaldurchmesser der inneren Teil-Längenabschnitte 23a jedoch kleiner sind als die in der Reihenrichtung 12a, 12b gemessene Breite der Sortierventile 8, besteht die vorteilhafte Möglichkeit, den Versatz der Sortierkanäle 23 in der Reihenrichtung 12a, 12b so zu wählen, dass in der Mündungsreihe 24 abwechselnd solche ersten und zweiten Kanalmündungen 23a', 23b' aufeinanderfolgend angeordnet sind, die zu Sortierkanälen 23 unterschiedlicher Ventilreihen 8a, 8b gehören. Somit können die in der Längsrichtung 5 aufeinanderfolgend angeordneten Sortierdüsen 3 abwechselnd mit Sortierventilen 8 der einen und der anderen Ventilreihe 8a, 8b verbunden sein. Dementsprechend besteht die vorteilhafte Möglichkeit, die auf zwei nebeneinander angeordneten Ventilreihen 8a, 8b aufgeteilten Sortierventile 8 funktionell solchen Sortierdüsen 3 zuzuordnen, die in ein und derselben Düsenreihe liegen. Beim Ausführungsbeispiel ist die Anzahl der in der Düsenreihe enthaltenen Sortierdüsen 3 doppelt so groß wie die in jeder Ventilreihe 8a, 8b enthaltene Anzahl von Sortierventilen 8.

Abweichend von diesem Ausführungsbeispiel besteht selbstverständlich auch die Möglichkeit, nur eine Ventilreihe von Sortierventilen 8 vorzusehen und sämtliche an der Bestückungsfläche 7 vorhandenen Einspeiseöffnungen 26 in einer Reihe liegend anzuordnen.

Die Ventilträger-Fügefläche 18 befindet sich zweckmäßigerweise an einer der Bestückungsfläche 7 entgegengesetzten Außenfläche des Ventilträgers 6, wobei sie bei entsprechendem Verlauf der inneren Teil-Längenabschnitte 23a auch an einer anderen Seite des Ventilträgers 6 platziert sein könnte.

Die Sortiereinheit 4 verfügt über einen gemeinsamen Speisekanal 27, aus dem sämtliche Sortierventile 8 mit zur Erzeugung der Luftstöße 2 dienender Druckluft versorgt werden. Dieser gemeinsame Speisekanal 27 ist insbesondere im Ventilträger 6 ausgebildet. Außen am Ventilträger 6 befindet sich eine Druckluft-Einspeiseöffnung 28 des gemeinsamen Speisekanals 27, die im Betrieb der Sortiervorrichtung 1 an eine nicht weiter abgebildete externe Druckluftquelle angeschlossen ist. Der gemeinsame Speisekanal 27 spaltet sich im Innern des Ventilträgers 6 zweckmäßigerweise in zwei parallel zueinander verlaufende Druckluft-Verteilkanäle 32a, 32b auf, die im Ventilträger 6 in der Reihenrichtung 12a, 12b verlaufen und die jeweils einer der beiden Ventilreihen 8a, 8b zugeordnet sind. Von jedem Druckluft-Verteilkanal 32a, 32b geht pro Sortierventil 8 ein Speise-Zweigkanal 33a, 33b ab, der an der Bestückungsfläche 7 im Bereich jeweils eines der dortigen Bestückungsplätze ausmündet, so dass er mit dem am betreffenden Bestückungsplatz montierten Sortierventil 8 in Fluidverbindung steht. Die Speise-Zweigkanäle 33a des einen Druckluft-Verteilkanals 32a führen zu den Sortierventilen 8 der ersten Ventilreihe 8a, während die Speise-Zweigkanäle 33b des zweiten Druckluft-Verteilkanals 32b zu den Sortierventilen 8 der zweiten Ventilreihe 8b führen.

Abweichend vom gezeigten Ausführungsbeispiel kann der gemeinsame Speisekanal 27 auch über lediglich einen einzigen Druckluft-Verteilkanal im Ventilträger 6 verfügen, der über eine entsprechende Anzahl von Speise-Zweigkanälen mit sämtlichen am Ventilträger 6 montierten Sortierventilen 8 kommuniziert. Dies gilt insbesondere für eine Ausgestaltung, bei der der Ventilträger 6 mit nur einer einzigen Reihe von Sortierventilen 8 ausgestattet ist.

Jedenfalls bietet der gemeinsame Speisekanal 27 die vorteilhafte Möglichkeit, sämtliche Sortierventile 8 der Sortiereinheit 4 gemeinsam mit Druckluft zur Erzeugung der Luftstöße 2 zu versorgen.

Jedes der Sortierventile 8 ist durch entsprechende elektrische Betätigung wahlweise in eine Offenstellung oder in eine Schließstellung schaltbar. Während jedes Sortierventil 8 in der Offenstellung eine Fluidverbindung zwischen dem ihm zugeordneten Sortierkanal 23 und dem gemeinsamen Speisekanal 27 herstellt oder freigibt, ist diese Fluidverbindung in der Schließstellung des Sortierventils 8 unterbrochen. Dies entspricht einer 2/2-Wege-Funktionalität, wie sie insbesondere auch für ein Absperrventil typisch ist.

Die Sortierventile 8 sind insbesondere so ausgebildet, dass sie in der Schließstellung komplett absperren und keinerlei Fluidübertritt aus dem gemeinsamen Speisekanal 27 in den zugeordneten Sortierkanal 23 zulassen.

Die Sortierventile 8 nehmen in der unbetätigten Grundstellung die Schließstellung ein. Um einen Luftstoß 2 zu erzeugen, werden sie nur kurzzeitig aktiviert und in die Offenstellung geschaltet. Insofern sind sie vorzugsweise als Schnellschalt-ventile ausgeführt, die in wenigen Millisekunden aus der Schließstellung in die Offenstellung und wieder zurück in die Schließstellung schalten können.

In den Zeiten, in denen ein Sortierventil 8 die Schließstellung einnimmt, besteht normalerweise die Gefahr, dass Verunreinigungen durch die Sortierdüse 3 hindurch in den betreffenden Sortierkanal 23 eintreten, die den Sortierkanal 23 verstopfen können oder möglicherweise bis hin zum Sortierventil 8 wandern und dort Funktionsstörungen hervorrufen können. Aus diesem Grund ist die Sortiervorrichtung 1 mit einer Spüleinrichtung 34 ausgestattet, mit deren Hilfe in den Sortierkanälen 23 eine zur jeweiligen Sortierdüse 3 hin gerichtete Spülluftströmung generierbar ist, die in der Zeichnung bei 35 mittels gepunkteter Pfeile angedeutet ist. Die Spüleinrichtung 34 enthält einen einer Mehrzahl von Sortierkanälen 23 und vorzugsweise sämtlichen Sortierkanälen 23 gemeinsam zugeordneten gemeinsamen Spülluftkanal 36, der aus einer Spülluftquelle 37 mit als Spülluft fungierender Druckluft gespeist wird, die aus dem gemeinsamen Spülluftkanal 36 in jeweils einem zur zugehörigen Sortierdüse 3 beabstandeten Bereich in jeden der Sortierkanäle 23 einspeisbar ist. Dabei resultiert ein großer Vorteil der Spüleinrichtung 34 daraus, dass die betreffenden Sortierkanäle 23 unabhängig von den Sortierventilen 8 an den gemeinsamen Spülluftkanal 36 angeschlossen sind. Die Spülluftströmung 35 wird also von den Sortierventilen 8 weder gesteuert noch tritt sie durch die Sortierventile 8 hindurch. Die Sortierventile 8 sind an der Bereitstellung der Sortierluftströmung 35 nicht beteiligt. Aus diesem Grund können die Sortierventile 8 von kostengünstiger Bauart sein.

Der Volumenstrom bzw. die Durchflussrate der Spülluftströmung 35 innerhalb der Sortierkanäle 23 ist wesentlich geringer als derjenige der einen Luftstoß 2 hervorrufenden Druckluftströmung. Insofern kann der Luftspülvorgang mit einem geringen Energieverbrauch ausgeführt werden, selbst wenn, was bevorzugt der Fall ist, die Spülluftströmung 35 ständig in sämtlichen Sortierkanälen 23 auftritt, unabhängig davon, ob das zugeordnete Sortierventil 8 die Schließstellung oder die Offenstellung einnimmt. Somit tritt aus jedem Sortierkanal 23 an seiner Sortierdüse 3 ständig Druckluft aus, und zwar entweder nur die Spülluft in der Schließstellung des Sortierventils 8 oder die Spülluft zuzüglich der einen Luftstoß hervorrufenden Druckluft in der Offenstellung des betreffenden Sortierventils 8. Somit ist unabhängig von den Reaktionszeiten der Sortierventile 8 ein wirksamer Schutz gegen ein Eintreten von Verunreinigungen in die Sortierkanäle 23 durch die Sortierdüsen 3 hindurch gegeben.

Der in einer fluidischen Parallelschaltung an sämtliche Sortierkanäle angeschlossene gemeinsame Spülluftkanal 36 mündet außen an der Sortiereinheit 4 zweckmäßigerweise mit einer Spülluft-Einspeiseöffnung 38 aus. An dieser Spülluft-Einspeiseöffnung 38 ist die Spülluftquelle 37 anschließbar oder angeschlossen, und zwar insbesondere unter Zwischenschaltung einer geeigneten Fluidleitung. Es ist weiterhin vorteilhaft, wenn dem gemeinsamen Spülluftkanal 36 eine in der Zeichnung schematisch angedeutete Spülstrom-Vorgabeeinrichtung 43 zugeordnet ist, die eine variable Vorgabe des Volumenstroms der Spülluftströmung 35 ermöglicht. Eine solche Spülstrom-Vorgabeeinrichtung 43 ist insbesondere von einem Druckregelventil 43a gebildet, wie dies beim Ausführungsbeispiel der Fall ist. Die Spülstrom-Vorgabeeinrichtung 43 kann alternativ oder zusätzlich in der Lage sein, den Spülstrom komplett zu unterbinden und die Spülluftquelle 37 von dem gemeinsamen Spülluftkanal 36 abzutrennen. Auf diese Weise besteht beispielsweise bei längeren Stillstandszeiten der Sortiervorrichtung 1 die Möglichkeit, die Spülluftströmung 35 zu unterbinden.

Die Spülstrom-Vorgabeeinrichtung 43 ist zweckmäßigerweise an die Spülluft-Einspeiseöffnung 38 angeschlossen. Sie kann eine bezüglich der Sortiereinheit 4 gesonderte Komponente sein. Es besteht allerdings auch die Möglichkeit, die Spülstrom-Vorgabeeinrichtuhg 43 als integralen Bestandteil der Sortiereinheit 4 auszubilden.

Der gemeinsame Spülluftkanal 36 kommuniziert mit jedem Sortierkanal 23 an einer im Folgenden als SpülluftEintrittsbereich 44 bezeichneten Stelle. Dieser Spülluft-Eintrittsbereich 44 ist innerhalb jedes Sortierkanals 43 sowohl zur Sortierdüse 3 als auch zum zugeordneten Sortierventil 8 bzw. zu der Einspeiseöffnung 26 beabstandet. Mithin wird nicht der gesamte Sortierkanal 23 von der Spülluftströmung 35 durchströmt, sondern nur der sich zwischen dem Spülluft-Eintrittsbereich 44 und der Sortierdüse 3 erstreckende Teil-Längenabschnitt. Bevorzugt ist dies der äußere Teil-Längenabschnitt 23b des Sortierkanals 23, wie das beim Ausführungsbeispiel der Fall ist. Hierzu ist vorgesehen, dass sich die Spülluft-Eintrittsbereiche 44 bei sämtlichen Sortierkanälen 43 in dem zwischen dem Düsenkörper 14 und dem Ventilträger 6 liegenden Fügebereich 15 angeordnet sind. Die Spülluft durchströmt folglich ausschließlich oder überwiegend nur den Düsenkörper 14 und gelangt nicht oder nur unwesentlich in den Ventilträger 6 hinein.

Der gemeinsame Spülluftkanal 36 ist zweckmäßigerweise ausschließlich in dem Düsenkörper 14 ausgebildet. Dementsprechend befindet sich auch die Spülluft-Einspeiseöffnung 38 zweckmäßigerweise an dem Düsenkörper 14, wobei sie Bestandteil einer Anschlusseinrichtung sein kann, die das Anbringen einer die Verbindung zur Spülstrom-Vorgabeeinrichtung 43 und zur Spülluftquelle 37 herstellenden Fluidleitung ermöglicht.

Als besonders vorteilhaft wird angesehen, einen Längenabschnitt des gemeinsamen Spülluftkanals 36 als einen ringförmig in sich geschlossenen Spülluft-Verteilkanal 45 auszuführen, der in dem Fügebereich 15 die dort befindliche Mündungsreihe 24 umrahmt. Dieser Spülluft-Verteilkanal 35 kommuniziert einerseits über einen Verbindungskanal 46 des gemeinsamen Spülluftkanals 36 mit der Spülluft-Einspeiseöffnung 38 und steht außerdem an den diversen Spülluft-Eintrittsbereichen 44 mit jedem der Sortierkanäle 23 in Fluidverbindung. Folglich sind sämtliche Sortierkanäle 23 in einer fluidischen Parallelschaltung an den Spülluft-Verteilkanal 45 angeschlossen und werden zeitgleich aus dem Spülluft-Verteilkanal 45 mit der Spülluft gespeist.

Damit sich im Vergleich zueinander konstante Volumenströme an Spülluft in den vorhandenen Sortierkanälen 23 ausbilden, sind die Spülluft-Eintrittsbereiche 44 vorzugsweise als Drosselstellen ausgeführt. Jede Drosselstelle ist durch einen Drosselkanal 47 definiert, wobei jedem Sortierkanal 23 ein eigener Drosselkanal 47 individuell zugeordnet ist. Jeder Sörtierkanal 23 ist also über einen eigenen individuellen Drosselkanal 47 an den Spülluft-Verteilkanal 45 angeschlossen.

Die Drosselkanäle 47 definieren untereinander zweckmäßigerweise die gleiche Drosselungsintensität und sorgen dafür, dass sich in den verschiedenen Sortierkanälen 23 gleichmäßige Spülluftströmungen 35 ausbilden. Die Drosselkanäle 47 begrenzen auch den Durchsatz und reduzieren folglich den Luftverbrauch.

Das Ausführungsbeispiel illustriert eine vorteilhafte Ausführungsform des Spülluft-Verteilkanals 45 und der damit in Verbindung stehenden Drosselkanäle 47. In diesem Zusammenhang ist in den Düsenkörper 14 in der Düsenkörper-Fügefläche 17 eine im Folgenden auch als Verteilnut 48 bezeichnete Nut ausgebildet, die sich rings um die Reihe der zu der Düsenkörper-Fügefläche 17 ausmündenden zweiten Kanalmündungen 23b' herum erstreckt und somit als in sich geschlossene Ringnut bezeichnet werden kann. Diese Verteilnut 48 ist an ihrer in der Düsenkörper-Fügefläche 17 liegenden offenen Längsseite von der gegenüberliegenden Ventilträger-Fügefläche 18 abgedeckt, so dass sich ein peripher geschlossener Kanal ergibt, der den Spülluft-Verteilkanal 45 bildet.

In vergleichbarer Weise sind die Drosselkanäle 47 realisiert. Jeder Drosselkanal 47 besteht aus einer in die Düsenkörper-Fügefläche 17 eingebrachten, im Folgenden als Drosselnut 52 bezeichneten Nut, die sich zwischen der Verteilnut 48 und jeweils einer der zweiten Kanalmündungen 23b' erstreckt und die ebenfalls an ihrer dem Ventilträger 6 zugewandten offenen Längsseite von der Ventilträger-Fügefläche 18 abgedeckt ist. Der Querschnitt jeder Drosselnut 52 bzw. jedes Drosselkanals 47 ist kleiner als der Querschnitt der Verteilnut 48 bzw. des Spülluft-Verteilkanals 45.

Bei einem nicht illustrierten Ausführungsbeispiel hat der Spülluft-Verteilkanal 45 eine endliche Länge und erstreckt sich lediglich entlang einer Längsseite der Mündungsreihe 24.

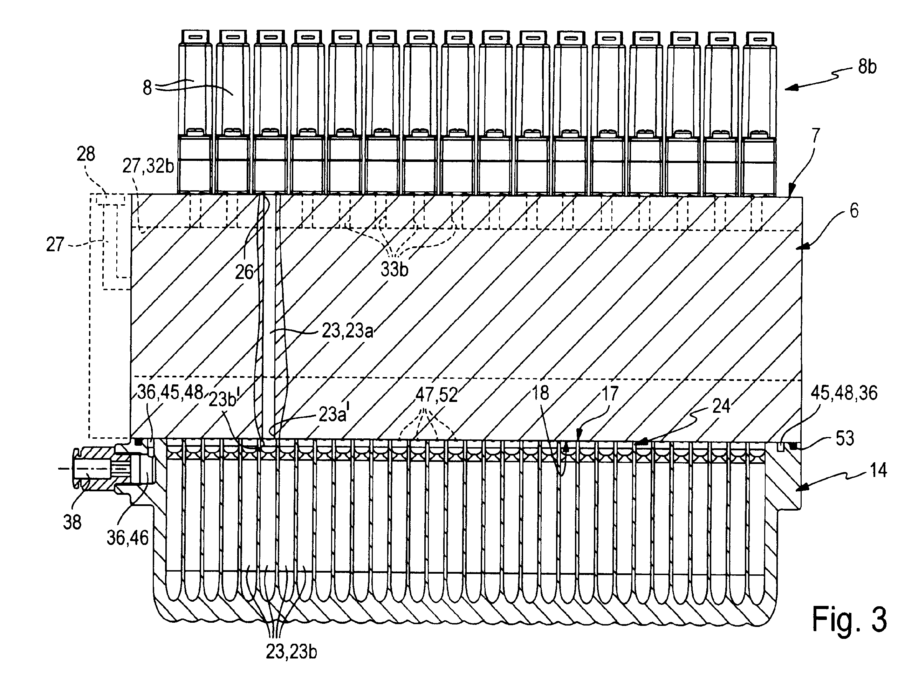

Der Verbindungskanal 46 mündet zweckmäßigerweise an einer der beiden Schmalseiten der Verteilnut 48 in den Nutgrund der Verteilnut 48 ein. Am besten erkennbar ist dies in Figur 3. Zweckmäßigerweise ist die Verteilnut 48 an ihren beiden Schmalseiten, an denen sie die Mündungsreihe 24 stirnseitig flankiert, halbkreisförmig abgerundet. Diejenigen Längenabschnitte der Verteilnut 48, die sich auf einander entgegengesetzten Seiten entlang der Mündungsreihe 24 erstrecken, haben zweckmäßigerweise einen linearen Verlauf.

Die Spülluft-Einspeiseöffnung 38 ist vorzugsweise an einer in der Längsrichtung der Mündungsreihe 24 orientierten Stirnseite des Düsenkörpers 14 angeordnet.

Abweichend vom Ausführungsbeispiel besteht auch die Möglichkeit, die Verteilnut 48 und die Drosselnuten 52 mit zumindest einem Teil ihres Querschnittes im Ventilträger 6 auszubilden, wobei die illustrierte Version den Vorteil hat, dass an der Ventilträger-Fügefläche 18 keine Strukturierungsmaßnahmen erforderlich sind.

Um eine Leckage von Spülluft in dem Fügebereich 15 zu verhindern, ist in dem Fügebereich 15 zweckmäßigerweise auch eine Dichtung 53 angeordnet, die den Spülluft-Verteilkanal 45 bzw. die Verteilnut 48 außen ringsum umrahmt. Die Dichtung 53 wird in dem Fügebereich 15 einerseits an den Ventilträger 6 und andererseits an den Düsenkörper 14 unter Abdichtung angedrückt.

Zweckmäßigerweise ist in der Düsenkörper-Fügefläche 17 eine die Verteilnut 48 umrahmende, in sich geschlossene Dichtungsaufnahmenut 54 ausgebildet, in die eine Dichtung 53 eingesetzt und insbesondere als separates ringförmiges Dichtelement eingelegt ist.

In dem von der Dichtung 53 umrahmten Bereich, in dem sich der Spülluft-Verteilkanal 45 und die Mündungsreihe 24 befinden, sind zweckmäßigerweise keine mittels Weichdichtungen realisierten Abdichtungsmaßnahmen vorhanden. Hier genügt der flächige harte Kontakt zwischen der Düsenkörper-Fügefläche 17 und der Ventilkörper-Fügefläche 18, um unkontrollierte Querströmungen zwischen den Sortierkanälen 23 auszuschließen.

## Patentansprüche

1. Sortiervorrichtung zum Aussortieren von Teilen mittels Luftstößen, mit mindestens einer Sortiereinheit (4), die einen Ventilträger (6) aufweist, der eine Mehrzahl von elektrisch betätigbaren Sortierventilen (8) mit 2/2-Wege-Funktionalität trägt, die aus einem gemeinsamen Speisekanal (27) mit Druckluft versorgt werden und die jeweils an einen zu einer Sortierdüse (3) führenden individuellen Sortierkanal (23) angeschlossen sind, wobei jedes Sortierventil (8) wahlweise in eine den zugeordneten Sortierkanal (23) mit dem Speisekanal (27) verbindende und dadurch das Austreten eines Luftstoßes (2) aus der zugeordneten Sortierdüse (3) hervorrufende Offenstellung oder in eine Schließstellung schaltbar ist, wobei in jeden Sortierkanal (23) zumindest während der Schließstellung des zugeordneten Sortierventils (8) zu Reinigungszwecken aus einem Spülluftkanal (36) der Sortiervorrichtung (1) Spülluft einspeisbar ist, die mit einem im Vergleich zu dem in der Offenstellung erzeugbaren Luftstoß geringeren Volumenstrom aus der Sortierdüse (3) austritt, **dadurch gekennzeichnet, dass** mehrere oder sämtliche Sortierkanäle (23) der Sortiereinheit (4) unabhängig von den Sortierventile (8) an einen gemeinsamen Spülluftkanal (27) angeschlossen sind.

2. Sortiervorrichtung nach Anspruch 1, **dadurch gekennzeichnet, dass** der gemeinsame Spülluftkanal (36) in jeden individuellen Sortierkanal (23) in einem Spülluft-Eintrittsbereich (44) einmündet, der sowohl zur zugeordneten Sortierdüse (3) als auch zum zugeordneten Sortierventil (8) beabstandet ist, insbesondere derart, dass die Spülluft nur einen sich an die Sortierdüse (3) anschließenden äußeren Teil-Längenabschnitt (23b) des Sortierkanals (23) durchströmt.

3. Sortiervorrichtung nach Anspruch 1 oder 2, **dadurch gekennzeichnet, dass** der gemeinsame Spülluftkanal (36) außen an der Sortiereinheit (4) mit einer Spülluft-Einspeiseöffnung (38) ausmündet, an die eine Spülluftquelle (37) anschließbar ist.

4. Sortiervorrichtung nach Anspruch 3, **dadurch gekennzeichnet, dass** dem gemeinsamen Spülluftkanal (36) eine Spülstrom-Vorgabeeinrichtung (43) zur variablen Vorgabe des Volumenstroms der Spülluftströmung (35) zugeordnet ist, insbesondere ein Druckregelventil (43a).

5. Sortiervorrichtung nach Anspruch 4 in Verbindung mit Anspruch 3, **dadurch gekennzeichnet, dass** die Spülstrom-Vorgabeeinrichtung (43) an die Spülluft-Einspeiseöffnung (38) anschließbar oder angeschlossen ist.

6. Sortiervorrichtung nach einem der Ansprüche 1 bis 5, **dadurch gekennzeichnet, dass** der gemeinsame Spülluftkanal (36) unter Zwischenschaltung jeweils mindestens eines individuellen Drosselkanals (47) mit jedem Sortierkanal (23) verbunden ist, wobei die individuellen Drosselkanäle (47) zweckmäßigerweise von längsseits abgedeckten Drosselnuten (52) gebildet sind, die in einem Körper (14) der Sortiereinheit (4) ausgebildet und von einem anderen Körper (6) der Sortiereinheit (4), abgedeckt sind.

7. Sortiervorrichtung nach einem der Ansprüche 1 bis 6, **dadurch gekennzeichnet, dass** die Sortiereinheit (4) einen in einem Fügebereich (15) an den Ventilträger (6) angesetzten Düsenkörper (14) aufweist, in dem die Sortierdüsen (3) ausgebildet sind, wobei jeder Sortierkanal (23) einen in dem Düsenkörper (14) verlaufenden äußeren Teil-Längenabschnitt (23b) und einen in dem Ventilträger (6) zum zugeordneten Sortierventil (8) hin verlaufenden inneren Teil-Längenabschnitt (23a) aufweist, wobei der äußere Teil-Längenabschnitt (23b) jedes Sortierkanals (23) in dem Fügebereich (15) in den zugeordneten inneren Teil-Längenabschnitt (23a) übergeht und wobei die Sortierkanäle (23) in dem Fügebereich (15) in fluidischer Parallelschaltung mit dem gemeinsamen Spülluftkanal (27) verbunden sind.

8. Sortiervorrichtung nach Anspruch 7, **dadurch gekennzeichnet, dass** der gemeinsame Spülluftkanal (27) ausschließlich in dem Düsenkörper (14) ausgebildet ist.

9. Sortiervorrichtung nach Anspruch 7 oder 8, **dadurch gekennzeichnet, dass** der Ventilträger (6) in dem Fügebereich (15) eine Ventilträger-Fügefläche (18) aufweist, an die der Düsenkörper (14) mit einer Düsenkörper-Fügefläche (17) angesetzt ist, wobei die äußeren Teil-Längenabschnitte (23b) der Sortierkanäle (23) mit den Sortierdüsen (23) entgegengesetzten Kanalmündungen (23b') an der Düsenkörper-Fügefläche (17) ausmünden und mit gegenüberliegend an der Ventilträger-Fügefläche (18) ausgebildeten Kanalmündungen (23a') der inneren Teil-Längenabschnitte (23a) der Sortierkanäle (23) kommunizieren, so dass sich wenigstens eine Mündungsreihe (24) bestehend aus sich paarweise gegenüberliegenden Kanalmündungen (23b', 23a') der äußeren Teil-Längenabschnitte (23b) und der inneren Teil-Längenabschnitte (23a) der Sortierkanäle (23) ergibt.

10. Sortiervorrichtung nach Anspruch 9, **dadurch gekennzeichnet, dass** die wenigstens eine Mündungsreihe (24) eine lineare Erstreckung hat.

11. Sörtiervorrichtung nach Anspruch 9 oder 10, **dadurch gekennzeichnet, dass** in dem Fügebereich (15) ein Spülluft-Verteilkanal (45) des gemeinsamen Spülluftkanals (27) angeordnet ist, der von einer in der Düsenkörper-Fügefläche (17) und/oder in der Ventilträger-Fügefläche (18) ausgebildeten und von der gegenüberliegenden Fügefläche (18, 17) abgedeckten Verteilnut (48) gebildet ist und sich entlang der Mündungsreihe (24) erstreckt, wobei er mit sämtlichen der Mündungsreihe (24) zugeordneten Sortierkanälen (23) in einer fluidischen Parallelschaltung kommuniziert.

12. Sortiervorrichtung nach Anspruch 11, **dadurch gekennzeichnet, dass** der Spülluft-Verteilkanal (45) einen in sich geschlossenen Längsverlauf hat und die Mündungsreihe (24) in dem Fügebereich (15) umrahmt.

13. Sortiervorrichtung nach Anspruch 12, **dadurch gekennzeichnet, dass** außen an dem Düsenkörper (14) eine mit dem gemeinsamen Spülluftkanal (36) kommunizierende Spülluft-Einspeiseöffnung (38) angeordnet ist, die über einen in dem Düsenkörper (14) ausgebildeten Verbindungskanal (46) mit der zu dem Spülluft-Verteilkanal (45) gehörenden Verteilnut (48) verbunden ist.

14. Sortiervorrichtung nach einem der Ansprüche 11 bis 13, **dadurch gekennzeichnet, dass** der Spülluft-Verteilkanal (45) in dem Fügebereich (15) unter Zwischenschaltung jeweils mindestens eines individuellen Drosselkanals (47) mit jedem Sortierkanal (23) verbunden ist, wobei die individuellen Drosselkanäle (47) von in der Düsenkörper-Fügefläche (17) und/oder in der Ventilträger-Fügefläche (18) ausgebildeten und von der jeweils anderen Fügefläche (18, 17) abgedeckten Drosselnuten (52) gebildet sind.

15. Sortiervorrichtung nach einem der Ansprüche 1 bis 14, **dadurch gekennzeichnet, dass** an dem Ventilträger (6) zwei zueinander parallele Ventilreihen (8a, 8b) von Sortierventilen (8) angeordnet sind, die mittels zugeordneter Sortierkanäle (23) mit in nur einer einzigen Reihe angeordneten Sortierdüsen (3) verbunden sind, wobei die in der Düsenreihe aufeinanderfolgend angeordneten Sortierdüsen (3) abwechselnd mit Sortierventilen (8) der einen und der anderen Ventilreihe (8a, 8b) verbunden sind.

## Claims

1. Sorting device for sorting out parts by means of air blasts, the sorting device comprising at least one sorting unit (4) provided with a valve support (6) supporting a plurality of electrically actuated sorting valves (8) which have a 2/2-way functionality, which are supplied with compressed air from a common feed passage (27) and each of which is connected to an individual sorting passage (23) leading to a sorting nozzle (3), wherein each sorting valve (8) can optionally be switched into an open position connecting the associated sorting passage (23) to the feed passage (27), thereby causing an air blast (2) to emerge from the associated sorting nozzle (3), or into a closed position, wherein purge air discharged from the sorting nozzle (3) at a lower flow rate than that of the air blast which can be generated in the open position can be fed into each sorting passage (23) from a purge air passage (36) of the sorting device (1) at least in the closed position of the associated sorting valve (8) for cleaning purposes, **characterised in that** several or all of the sorting passages (23) of the sorting unit (4) are connected to a common purge air passage (27) independently of the sorting valves (8).

2. Sorting device according to claim 1, **characterised in that** the common purge air passage (36) terminates into each individual sorting passage (23) in a purge air entry region (44) which is distant both from the associated sorting nozzle (3) and from the associated sorting valve (8), in particular in such a way that the purge air flows only through a longitudinal outer subsection (23b) of the sorting passage (23) which adjoins the sorting nozzle (3).

3. Sorting device according to claim 1 or 2, **characterised in that** the common feed passage (36) terminates on the outside of the sorting unit (4) with a purge air feed-in port (38), to which a purge air source (37) can be connected.

4. Sorting device according to claim 3, **characterised in that** the common purge air passage (36) is assigned a purge air presetting device (43) for the variable presetting of the flow rate of the purge air flow (35), in particular a pressure control valve (43a).

5. Sorting device according to claim 4 in combination with claim 3, **characterised in that** the purge air presetting device (43) can be or is connected to the purge air feed-in port (38).

6. Sorting device according to any of claims 1 to 5, **characterised in that** the common purge air passage (36) is connected to each sorting passage (23) with the interposition of at least one individual restrictor passage (47) each, the individual restrictor passages (47) being expediently represented by longitudinally covered restrictor grooves (52), which are formed in a body (14) of the sorting unit (4) and covered by another body (6) of the sorting unit (4).

7. Sorting device according to any of claims 1 to 6, **characterised in that** the sorting unit (4) comprises a nozzle body (14), which is fitted to the valve support (6) in a joint region (15), and in which the sorting nozzles (3) are formed, wherein each sorting passage (23) comprises a longitudinal outer subsection (23b) extending in the nozzle body (14) and a longitudinal inner subsection (23a) extending in the valve support (6) towards the associated sorting valve (8), wherein the longitudinal outer subsection (23b) of each sorting passage (23) merges into the associated longitudinal inner subsection (23a) in the joint region (15) and wherein the sorting passages (23) are fluidically parallel-connected to the common purge air passage (27) in the joint region (15).

8. Sorting device according to claim 7, **characterised in that** the common purge air passage (27) is exclusively formed in the nozzle body (14),

9. Sorting device according to claim 7 or 8, **characterised in that** the valve support (6) has in the joint region (15) a valve support joint surface (18), to which the nozzle body (14) is attached by a nozzle body joint surface (17), wherein the longitudinal outer subsections (23b) of the sorting passages (23) terminate at the nozzle body joint surface (17) with passage orifices (23b') opposite the sorting nozzles (3) and communicate with passage orifices (23a') of the longitudinal inner subsections (23a) of the sorting passages (23), which passage orifices (23a') are formed on the opposite side on the valve support joint surface (18), resulting in at least one row of orifices (24) consisting of oppositely paired passage orifices (23b', 23a') of the longitudinal outer subsections (23b) and the longitudinal inner subsections (23a) of the sorting passages (23).

10. Sorting device according to claim 9, **characterised in that** the at least one row of orifices (24) has a linear extension.

11. Sorting device according to claim 9 or 10, **characterised in that** a purge air distribution passage (45) of the common purge air passage (27), which is represented by a distribution groove (48) which is formed in the nozzle body joint surface (17) and/or in the valve support joint surface (18) and covered by the opposite joint surface (18, 17), and which extends along the row of orifices (24), is located in the joint region (15), communicating in a fluidic parallel-connection with all sorting passages (23) assigned to the row of orifices (24).

12. Sorting device according to claim 11, **characterised in that** the purge air distribution passage (45) has a self-contained longitudinal dimension, framing the row of orifices (24) in the joint region (15).

13. Sorting device according to claim 12, **characterised in that** a purge air feed-in port (38), which communicates with the joint purge air passage (36) and is connected to the distribution groove (48) forming part of the purge air distribution passage (45) via a connecting passage (46) formed in the nozzle body (14), is located on the outside of the nozzle body (14).

14. Sorting device according to any of claims 11 to 13, **characterised in that** the purge air distribution passage (45) is connected to each sorting passage (23) in the joint region (15) with the interposition of at least one individual restrictor passage (47) each, the individual restrictor passages (47) being represented by restrictor grooves (52) formed in the nozzle body joint surface (17) and/or in the valve support joint surface (18) and covered by the opposite joint surface (18, 17).

15. Sorting device according to any of claims 1 to 14, **characterised in that** two parallel valve banks (8a, 8b) of sorting valves (8), which are connected to sorting nozzles (3) arranged in a single row only by means of associated sorting passages (23), are located on the valve support (6), the sorting nozzles (3) arranged consecutively in the row of nozzles being alternately connected to the sorting valves (8) of the one and the other valve bank (8a, 8b).

## Revendications

1. Dispositif de tri servant à trier des pièces au moyen de jets d'air, comprenant au moins une unité de tri (4), qui présentent un support de soupape (6), lequel supporte une multitude de soupapes de tri (8) à actionnement électrique pourvues d'une fonctionnalité à 2/2 voies, lesquelles sont alimentées en air comprimé à partir d'un canal d'alimentation (27) commun et qui sont raccordées respectivement à un canal de tri (23) individuel menant à une tuyère de tri (3), dans lequel chaque soupape de tri (8) peut être commutée au choix dans une position d'ouverture reliant le canal de tri (23) associé au canal d'alimentation (27) et provoquant de ce fait la sortie d'un jet d'air (2) hors de la tuyère de sortie (3) associée ou dans une position de fermeture, dans lequel de l'air de rinçage peut être injecté dans chaque canal de tri (23) au moins quand la soupape de tri (8) associée se trouve dans la position de fermeture, à des fins de nettoyage, depuis un canal d'air de rinçage (36) du dispositif de tri (1), lequel air de rinçage sort de la tuyère de tri (3) avec un flux volumique inférieur en comparaison avec le jet d'air pouvant être produit dans la position d'ouverture, **caractérisé en ce que** plusieurs canaux de tri ou tous les canaux de tri (23) de l'unité de tri (4) sont raccordés à un canal d'air de rinçage (27) commun indépendamment des soupapes de tri (8).

2. Dispositif de tri selon la revendication 1, **caractérisé en ce que** le canal d'air de rinçage (36) commun débouche côté entrée dans chaque canal de tri (23) individuel dans une zone d'entrée de l'air de rinçage (44), lequel est tenu à distance aussi bien de la tuyère de tri (3) associée que de la soupape de tri (8) associée, en particulier de telle manière que le flux d'air de rinçage travers seulement une section longitudinale partielle extérieure (23b), se raccordant à la tuyère de tri (3), du canal de tri (23).

3. Dispositif de tri selon la revendication 1 ou 2, **caractérisé en ce que** le canal d'air de rinçage (36) commun débouche côté sortie à l'extérieur au niveau de l'unité de tri (4) avec une ouverture d'alimentation en air de rinçage (38), à laquelle une source d'air de rinçage (37) peut être raccordée.

4. Dispositif de tri selon la revendication 3, **caractérisé en ce qu'**un système de spécification de flux de rinçage (43) servant à spécifier de manière variable le flux volumique de l'écoulement d'air de rinçage (35), en particulier une soupape de régulation de pression (43a), est associé au canal d'air de rinçage (36) commun.

5. Dispositif de tri selon la revendication 4 en lien avec la revendication 3, **caractérisé en ce que** le système de spécification de flux de rinçage (43) peut être raccordé ou est raccordé à l'ouverture d'alimentation en air de rinçage (38).

6. Dispositif de tri selon l'une quelconque des revendications 1 à 5, **caractérisé en ce que** le canal d'air de rinçage (36) commun est relié à chaque canal de tri (23) en intercalant respectivement au moins un canal d'étranglement (47) individuel, dans lequel les canaux d'étranglement (47) individuels sont formés de manière appropriée par des rainures d'étranglement (52) recouvertes sur le côté longitudinal, lesquelles sont réalisées dans un corps (14) de l'unité de tri (4) et sont recouvertes par un autre corps (6) de l'unité de tri (4).

7. Dispositif de tri selon l'une quelconque des revendications 1 à 6, **caractérisé en ce que** l'unité de tri (4) présente un corps de tuyère (14) placé dans une zone de jonction (15) au niveau du support de soupape (6), dans lequel les tuyères de tri (3) sont réalisées, dans lequel chaque canal de tri (23) présente une section longitudinale partielle extérieure (23b) s'étendant dans le corps de tuyère (14) et une section longitudinale partielle intérieure (23a) s'étendant dans le support de soupape (6) en direction de la soupape de tri (8) associée, dans lequel la section longitudinale partielle extérieure (23b) de chaque canal de tri (23) devient, dans la zone de jonction (15), la section longitudinale partielle intérieure (23a) associée et dans lequel les canaux de tri (23) sont reliés, dans la zone de jonction (15), selon un branchement parallèle fluidique, au canal d'air de rinçage (27) commun.

8. Dispositif de tri selon la revendication 7, **caractérisé en ce que** le canal d'air de rinçage (27) commun est réalisé exclusivement dans le corps de tuyère (14).

9. Dispositif de tri selon la revendication 7 ou 8, **caractérisé en ce que** le support de soupape (6) présente, dans la zone de jonction (15), une surface de jonction de support de soupape (18), au niveau de laquelle le corps de tuyère (14) pourvu d'une surface de jonction de corps de tuyère (17) est placé, dans lequel les sections longitudinales partielles extérieures (23b) des canaux dé tri (23) pourvus des embouchures de canal (23b') placées en regard des tuyères de tri (23) débouchent côté sortie au niveau de la surface de jonction de corps de soupape (17) et communiquent avec des embouchures de canal (23a'), réalisées à l'opposé au niveau de la surface de jonction de support de soupape (18), des sections longitudinales partielles intérieures (23a) des canaux de tri (23) de manière à donner lieu à au moins une rangée d'embouchures (24) constituée d'embouchures de canal (23b', 23a') opposées par paire des sections longitudinales partielles extérieures (23b) et des sections longitudinales partielles intérieures (23a) des canaux de tri (23).

10. Dispositif de tri selon la revendication 9, **caractérisé en ce que** l'au moins une rangée d'embouchures (24) a une extension linéaire.

11. Dispositif de tri selon la revendication 9 ou 10, **caractérisé en ce qu'**est disposé dans la zone de jonction (15) un canal de répartition d'air de rinçage (45) du canal d'air de rinçage (27) commun, qui est formé par une rainure de répartition (48) réalisée dans la surface de jonction de corps de tuyère (17) et/ou dans la surface de jonction de support de soupape (18) et recouverte par la surface de jonction (18, 17) opposée et lequel s'étend le long de la rangée d'embouchures (24), dans lequel il communique avec tous les canaux de tri (23) associés à la rangée d'embouchures (24) dans un branchement parallèle fluidique.

12. Dispositif de tri selon la revendication 11, **caractérisé en ce que** le canal de répartition d'air de rinçage (45) a un contour longitudinal fermé sur luimême et encadre la rangée d'embouchures (24) dans la zone de jonction (15).

13. Dispositif de tri selon la revendication 12, **caractérisé en ce qu'**une ouverture d'alimentation en air de rinçage (38) communiquant avec le canal d'air de rinçage (36) commun est disposée côté extérieur au niveau du corps de tuyère (14), laquelle est reliée, par l'intermédiaire d'un canal de liaison (46) réalisé dans le corps de buse (14), à la rainure de répartition (48) faisant partie du canal de répartition d'air de rinçage (45).

14. Dispositif de tri selon l'une quelconque des revendications 11 à 13, **caractérisé en ce que** le canal de répartition d'air de rinçage (45) est relié, dans la zone de jonction (15), en intercalant respectivement au moins un canal d'étranglement (47) individuel, à chaque canal de tri (23), dans lequel les canaux d'étranglement (47) individuels sont formés par des rainures d'étranglement (52) réalisées dans la surface de jonction de corps de tuyère (17) et/ou dans la surface de jonction de support de soupape (18) et recouvertes par l'autre surface de jonction (18, 17) respective.

15. Dispositif de tri selon l'une quelconque des revendications 1 à 14, **caractérisé en ce que** deux rangées de soupapes (8a, 8b) parallèles l'une par rapport à l'autre de soupapes de tri (8) sont disposées au niveau du support de soupape (6), lesquelles sont reliées au moyen de canaux de tri (23) associés à des tuyères de tri (3) disposées dans seulement une unique rangée, dans lequel les tuyères de tri (3) disposées dans la rangée de tuyères de manière à se suivre sont reliées en alternance à des soupapes de tri (8) de l'une et de l'autre rangée de soupapes (8a, 8b).
